# EUROPEAN PATENT SPECIFICATION

(11) **EP 4 229 106 B1**
(45) Date of publication and mention of the grant of the patent: **03.06.2026**
(21) Application number: 21766772.4
(22) Date of filing: 17.08.2021
(51) Int. Cl.: C08G 18/48, C08G 18/42, C08G 18/76, C08G 18/78, C08G 18/28, C08G 18/71, C08K 3/013, C08K 3/34, C08G 18/20, C08K 5/00, C08G 18/79, C08K 3/04, C09J 175/06, C09J 175/08, C08G 18/30, C08G 18/10, C08G 18/12, C08K 3/26

(54) **ONE-COMPONENT POLYURETHANE ADHESIVE**
EINKOMPONENTEN-POLYURETHANKLEBSTOFF
ADHÉSIF DE POLYURÉTHANE MONO-COMPOSANT

(30) Priority: 14.10.2020 US 202063091877 P
(43) Date of publication of application: 23.08.2023
(73) Proprietor: DDP Specialty Electronic Materials US, LLC, Wilmington, DE 19805 (US)
(72) Inventor: CLARK, Thomas, Auburn Hills, Michigan 48326 (US); ALLISON, Steve, Auburn Hills, Michigan 48326 (US); MALVADKAR, Niranjan, Auburn Hills, Michigan 48326 (US); ANTWI, Aaron, Auburn Hills, Michigan 48326 (US); LEITCH, Jeffrey, Auburn Hills, Michigan 48326 (US); ZHU, Huide, Auburn Hills, Michigan 48326 (US); SOPHIEA, Daniel, Auburn Hills, Michigan 48326 (US); HENDERSON, Michelle, Auburn Hills, Michigan 48326 (US); KNEISEL, Andrew, Auburn Hills, Michigan 48326 (US); VOGEL, Gavin, Auburn Hills, Michigan 48326 (US); TASSELLI, Gabriele, 8807 Freienbach (CH)
(74) Representative: Abitz & Partner
(86) International application number: PCT/US2021/046240
(87) International publication number: WO 2022/081248

(56) References cited:
- WO-A1-2019/156737

## Description

### Field of Invention

The present invention relates to the field of one-component polyurethane adhesives, particularly polyurethane adhesives for adhesion to glass.

### Background of the Invention

One part polyurethane adhesives are used extensively in the automotive industry, particularly to facilitate rapid windshield repair. Commercial adhesives are designed to offer high modulus (> 4.0 MPa Young's Modulus) to provide good vehicle stiffness and smooth ride. To satisfy consumer requirements, adhesives have been designed to allow the customer to safely drive the vehicle within 30 minutes of adhesive application (MDAT, minimum drive away time). However, such adhesives require primers on the glass frit of the replacement windshield in order to generate good adhesive strength (lap shear values > 350 psi). Adhesives that provide primerless adhesion to the glass frit have been reported, but these adhesives lack the desirable high modulus and 30 minute MDAT.

There exists a need for one-component polyurethane adhesives for windshield repair that offer high modulus, good primerless adhesion and a MDAT of 30 minutes or less.

### Summary of the Invention

In a first aspect, the invention provides a one-component polyurethane adhesive composition comprising:
(A) at least one polyether prepolymer at a total content of polyether prepolymer of 50-57 wt%;
(B) at least one polyester prepolymer at a total content of polyester prepolymer of 1.2-2.0 wt%;
(C) at least one aliphatic polyisocyanate at a total aliphatic polyisocyanate content of 0.4-1.2 wt%;
(D) at least one aromatic polyisocyanate at a total aromatic polyisocyanate content of 0.4-1.2 wt%;
(E) at least one isocyanate functionalized silane at a total isocyanate functionalized silane content of 0.4-1.5 wt%;
(F) amine catalyst at 0.50-0.99 wt%;
(G) at least one mercaptosilane at a total mercaptosilane content of < 1.2 wt% and/or (G') at least one aminosilane at a total aminosilane content of < 0.5 wt% wherein the combination of amino and/or mercaptosilane is at least 0.6 wt%;
(H) carbon black at 17-20 wt%;
(I) calcium carbonate at 3-30 wt%;
(J) optionally filler, other than calcium carbonate and/or carbon black, at 0-27 wt%;
wherein the total polyisocyanate content is 1.2 to 3 wt%, the total of calcium carbonate plus filler is 20-30 wt%, and the weight percentages are based on the total weight of the polyurethane adhesive.

In a second aspect, the invention provides an adhered assembly comprising:
a glass substrate;
a second substrate;
a layer of an adhesive composition of the invention being adhesively in contact with both substrates.

In a third aspect, the invention provides a method for adhering a glass substrate to a second substrate, the method comprising the steps:
(1) providing a glass substrate and a second substrate;
(2) applying an adhesive composition of the invention to the glass substrate, the second substrate or both;
(3) assembling the glass substrate and the second substrate such that the adhesive is in adhesive contact with both substrates.

### Detailed Description of the Invention

The inventors have surprisingly found that an adhesive composition according to claim 1 satisfies the requirements for a thirty-minute drive away time, that is:
- impact strength after 30 minutes > 3.4 J;
- Young's modulus > 4 MPa;
- Lap shear strength on fritted glass > 350 psi and > 80% cohesive failure after 3 days at 23°C and 50% RH;
- Preferably electrically resistivity of > 1x10⁸ ohm*cm

### Definitions and abbreviations

- MDI: 4,4'-Methylenebis(phenyl isocyanate)
- HDI: Hexamethylene diisocyanate
- PU: polyurethane

Molecular weights of polymers as reported herein are reported in Daltons (Da) as number or weight average molecular weights, as determined by size exclusion chromatography (SEC).

The one-component polyurethane adhesive compositions of the invention comprise:
(A) at least one polyether prepolymer at a total content of polyether prepolymer of 50-57 wt%;
(B) at least one polyester prepolymer at a total content of polyester prepolymer of 1.2-2.0 wt%;
(C) at least one aliphatic polyisocyanate at a total aliphatic polyisocyanate content of 0.4-1.2 wt%;
(D) at least one aromatic polyisocyanate at a total aromatic polyisocyanate content of 0.4-1.2 wt%;
(E) at least one isocyanate functionalized silane at a total isocyanate functionalized silane content of 0.4-1.5 wt%;
(F) amine catalyst at 0.50-0.99 wt%;
(G) at least one mercaptosilane at a total mercaptosilane content of < 1.2 wt% and/or (G') at least one aminosilane at a total aminosilane content of < 0.5 wt% wherein the combination of amino and/or mercaptosilane is at least 0.6 wt%;
(H) carbon black at 17-20 wt%;
(I) calcium carbonate at 3-30 wt%;
(J) optionally filler, other than calcium carbonate and/or carbon black, at 0-27 wt%;
wherein the total polyisocyanate content is 1.2 to 3 wt%, the total of calcium carbonate plus clay as optional filler is 20-30 wt%, and the weight percentages are based on the total weight of the polyurethane adhesive.

### Polyether prepolymer (A)

The inventive compositions comprise a polyether prepolymer at 50-57 wt%, based on the total weight of the composition.

Polyether prepolymers include polymers that are made by polymerizing one or more polyether polyols in the presence of a polyisocyanate, preferable diisocyanate. Polyether polyols useful in the invention include for example, polyether polyols, poly(alkylene carbonate)polyols, hydroxyl containing polythioethers, polymer polyols, and mixtures thereof. Polyether polyols are well-known in the art and include, for example, polyoxyethylene, polyoxypropylene, polyoxybutylene, and polytetramethylene ether diols and triols which are prepared by reacting an unsubstituted or halogen- or aromatic-substituted ethylene oxide or propylene oxide with an initiator compound containing two or more active hydrogen groups such as water, ammonia, a polyalcohol, or an amine. In general, polyether polyols may be prepared by polymerizing alkylene oxides in the presence of an active hydrogen-containing initiator compound. Preferred polyether polyols contain one or more alkylene oxide units in the backbone of the polyol. Preferred alkylene oxide units are ethylene oxide, propylene oxide, butylene oxide and mixtures thereof. Preferably, the polyol contains propylene oxide units, ethylene oxide units or a mixture thereof. In the embodiment where a mixture of alkylene oxide units is contained in a polyol, the different units can be randomly arranged or can be arranged in blocks of each alkylene oxides. In one preferred embodiment, the polyol comprises propylene oxide chains with ethylene oxide chains capping the polyol. In a preferred embodiment, the polyether polyols are a mixture of polyether diols and polyether triols. Preferably, the polyether polyol or mixture has a functionality of at least about 1.5, more preferably at least about 1.8, and is most preferably at least about 2.0; and is preferably no greater than about 4.0, more preferably no greater than about 3.5, and is most preferably no greater than about 3.0. Preferably, the equivalent weight of the polyether polyol mixture is at least about 200, more preferably at least about 500, and is more preferably at least about 1,000; and is preferably no greater than about 5,000, more preferably no greater than about 3,000, and is most preferably no greater than about 2,500.

More specific examples include:
1. Difunctional polyols (diols), such as poly(alkylene oxide)diols, where the alkylene group is C₂ to C₄, particularly poly(ethylene oxide)diol, poly(propylene oxide)diol and poly(tetramethylene oxide)diol, with poly(propylene oxide)diol being particularly preferred. In a particularly preferred embodiment the polyether prepolymer comprises a nominally difunctional, poly(propylene oxide) having a hydroxyl number of 56 (equivalent weight 1000);
2. Trifunctional polyols (triols), such as those based on the alkylene oxides initiated with a trifunctional polyol, such as trimethylolpropane, where the alkylene group is C₂ to C₄, particularly ethylene oxide, propylene oxide and butylene oxide, with propylene oxide being particularly preferred. In a particularly preferred embodiment, the polyether prepolymer comprises a nominally trifunctional poly(propylene oxide) having a hydroxyl number of 36 (equivalent weight 1558); the polymer may or may not be capped with ethylene oxide to modify reactivity
3. A mixture of 1 and 2. Particularly preferred is a mixture of 1 and 2, more particularly preferred is a mixture of a) a nominally difunctional, poly(propylene oxide) having a hydroxyl number of 56 (equivalent weight 1000) and b) a nominally trifunctional poly(propylene oxide) having a hydroxyl number of 36 (equivalent weight 1558), particularly at a weight ratio b)/a) of 1:2 to 2:1.

The diisocyanate that may be used to make the polyether prepolymer is not particularly limited. Aliphatic and aromatic diisocyanates may be used. Examples of suitable diisocyanates include toluene diisocyanate (TDI), hexamethylene diisocyanate (HDI), naphthalene diisocyanate (NDI), methylene bis-cyclohexylisocyanate (HMDI) (hydrogenated MDI), and isophorone diisocyanate (IPDI), with MDI being particularly preferred.

In a particularly preferred embodiment, the polyether prepolymer comprises a nominally trifunctional poly(propylene oxide) having a hydroxyl number of 36 (equivalent weight 1558) and a nominally trifunctional poly(propylene oxide) having a hydroxyl number of 56 (equivalent weight 1000), reacted with MDI.

In a preferred embodiment, the polyether prepolymer has an isocyanate content of 1.25% by weight, and a viscosity of 16,000 cps at 23°C as measured according to the procedure described in US patent no. 5,922,809 at column 12, lines 38 to 49.

The polyether prepolymer is present at 50- 57 wt%, based on the total weight of the adhesive composition, more preferably 51-54 wt%, more particularly preferably 52-54 wt%.

In a particularly preferred embodiment, the adhesive composition of the invention comprises 52-54 wt% of a polyether prepolymer%, based on the total weight of the adhesive composition, comprising a nominally trifunctional poly(propylene oxide) having a hydroxyl number of 36 (equivalent weight 1558) and a nominally trifunctional poly(propylene oxide) having a hydroxyl number of 56 (equivalent weight 1000), reacted with MDI, and having an isocyanate content of 1.25% by weight, and a viscosity of 16,000 cps at 23°C as measured according to the procedure described in US patent no. 5,922,809 at column 12, lines 38 to 49.

### Polyester prepolymer (B)

The inventive adhesive compositions comprise a polyester prepolymer at 1.2-2.0 wt%, based on the total weight of the composition.

Polyester polyols include polymers that are made by reacting one or more linear copolyesters with primary hydroxyl functionality with a polyisocyanate, preferably a diisocyanate. Particularly preferred are copolyesters having molecular weight of 3,000-4,000 Da, preferably 3,500 Da.

The diisocyanate that may be used to make the polyester prepolymer is not particularly limited. Aliphatic and aromatic diisocyanates may be used. Examples of suitable diisocyanates include toluene diisocyanate (TDI), hexamethylene diisocyanate (HDI), naphthalene diisocyanate (NDI), methylene bis-cyclohexylisocyanate (HMDI) (hydrogenated MDI), and isophorone diisocyanate (IPDI), with MDI being particularly preferred.

In a preferred embodiment, the polyester prepolymer is made by reacting a copolyester of molecular weight of 3,500 Da with MDI. Preferably it has a melting point of 45-90°C.

The polyester prepolymer is present at 1.2-2.0 wt%, based on the total weight of the composition, preferably at 1.25-1.55 wt%, more preferably 1.3 to 1.5 wt%, based on the total weight of the adhesive composition.

### Aliphatic polyisocyanate (C)

The adhesive compositions of the invention comprise at least one aliphatic polyisocyanate at a total aliphatic polyisocyanate content of 0.4-1.2 wt%.

The aliphatic polyisocyanate is not particularly limited. Some examples include isophorone diisocyanate, 1,6-hexamethylene diisocyanate, bis(4-isocyanatocyclohexyl)methane, and trimethyl hexamethylene diisocyanate, any of which can be modified to include biuret, allophonate, urea, carbamate, isocyanurate or carbodiimide groups.

In a preferred embodiment, the aliphatic polyisocyanate is based on HDI trimer having an NCO content of 21.8 ± 0.3 % (according to DIN EN ISO 11 909).

The aliphatic polyisocyanate is present in the adhesive compositions of the invention at 0.4-1.2 wt%, based on the total weight of the composition, preferably at 0.45 to 1 wt%, more preferably 0.5 to 1 wt%.

In a particularly preferred embodiment, the aliphatic polyisocyanate is HDI trimer having an NCO content of 21.8 ± 0.3 % (according to DIN EN ISO 11 909) at 0.5 to 1 wt%, based on the total weight of the adhesive composition.

### Aromatic polyisocyanate (D)

The adhesive compositions of the invention comprise (D) at least one aromatic polyisocyanate at a total aromatic polyisocyanate content of 0.4-1.2 wt%, based on the total weight of the adhesive composition.

The aromatic polyisocyanate is not particularly limited. Examples include diphenylmethane diisocyanate (MDI), polymethylene polyphenylisocyanates, polymeric MDI (PMDI, a mixture of diphenylmethane diisocyanate and polymethylene polyphenylioscyanates), tetramethylxylene diisocyanate, toluene diisocyanate, any of which can be modified to include biuret, allophonate, urea, carbamate, isocyanurate or carbodiimide groups.

In a preferred embodiment, the aromatic polyisocyanate is polymethylene polyphenylisocyanate that contains MDI, having an NCO content of 30.4 % (according to DIN EN ISO 11 909).

The aromatic polyisocyanate is used at 0.4 to 1.2 wt%, based on the total weight of the adhesive composition, preferably at 0.5 to 1 wt%, more preferably at 0.75 wt%.

In a particularly preferred embodiment the aromatic polyisocyanate is polymethylene polyphenylisocyanate that contains MDI, having an NCO content of 30.4 % (according to DIN EN ISO 11 909) at 0.5 to 1 wt%, more preferably 0.75 wt%, based on the total weight of the adhesive composition.

### Isocyanate functionalized silane (E)

The adhesive compositions of the invention comprise (E) at least one isocyanate functionalized silane at a total isocyanate functionalized silane content of 0.4-1.5 wt%, based on the total weight of the adhesive composition.

The isocyanate functionalized silane is not particularly limited. Examples include those made by reacting a polyisocyanate compound, such as toluenediisocyanate, methylenediphenyl diisocyanate, with a polyalkyleneoxide having terminal hydroxyl groups to produce polyalkyleneoxide having terminal isocyanate groups, which are subsequently reacted with an active hydrogen-containing group W of a silicone compound of the formula: 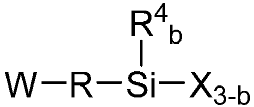 wherein W is an active hydrogen-containing group selected from the group consisting of a hydroxyl group, a carboxyl group, a mercapto group, a primary amino group and a secondary amino group, X is hydrolysable alkoxy group, and R⁴ is a C₁-C₂₀ alkyl, a C₆-C₂₀ aryl, a C₁-C₂₀ aralkyl group, R is selected from C₁-C₂₀ hydrocarbon groups, particularly a methylene or propylene group, and b is 0, 1 or 2.

More examples include:
- reaction products of aminosilanes with polyisocyanates;
- reaction products of mercaptosilanes with polyisocyanates;
- reaction products of carboxylate functionalized silanes with polyisocyanates;
- isocyanate functionalized silanes such as (3-isocyanatopropyl)trimethoxysilane.

Particularly preferred are reaction products of aminosilanes with polyisocyanates, more particularly secondary amine aminosilanes.

In a preferred embodiment, the isocyanate functionalised silane is a reaction product of a secondary aminoalkoxy silane and a polyisocyanate, for example a reaction product of N,N-bis[(3-trimethoxysilyl)-propyl]amine) reacted with HDI-Biuret.

In a particularly preferred embodiment, the isocyanate functionalised silane is a reaction product of N,N-bis[(3-trimethoxysilyl)-propyl]amine) reacted with HDI-Biuret, having an isocyanate content of 7%. The isocyanate functionalized silane may contain additional inert additives such as plasticizers

The isocyanate functionalised silane is present at 0.4-1.5 wt%, based on the total weight of the adhesive composition, preferably at 0.6 to 1.2 wt%, more preferably at 0.85-0.97 wt%.

In a particularly preferred embodiment, the isocyanate functionalised silane is a reaction product of N,N-bis[(3-trimethoxysilyl)-propyl]amine) reacted with HDI-Biuret, having an isocyanate content of 7% at 0.8-1.0 wt%, preferably 0.85-0.97 wt%, based on the total weight of the adhesive composition.

### Amine catalyst (F)

The adhesive compositions of the invention comprise (F) an amine catalyst at 0.50-0.99 wt%, based on the total weight of the adhesive composition.

The amine catalyst is any amine catalyst capable of catalysing the reaction of an isocyanate with moisture. Preferred are tertiary amines, for example aliphatic cyclic and non-cyclic tertiary amines, such as N,N-dimethylcyclohexane, triethylenediamine, N,N,N,N-tetramethylalkylenediamine, N,N,N,N-pentamethyldiethylenetriamine, triethylamine, N,N-dimethylbenzylamine, N,N-dimethylhexadecylamine, N,N-dimethylbutylamine, 2,2'-dimorpholinodiethyl ether.

Particularly preferred is 2,2'-dimorpholinodiethyl ether.

The amine catalyst is used at 0.5-0.99 wt%, based on the total weight of the adhesive composition, preferably at 0.6 to 0.8 wt%, more preferably at 0.75 wt%.

In a preferred embodiment, the amine catalyst is 2,2'-dimorpholinodiethyl ether at 0.75 wt%, based on the total weight of the adhesive composition.

The adhesive compositions of the invention may additionally contain a tin catalyst, a zinc catalyst (e.g. zinc carboxylates), bismuth catalysts, and mixtures of these.

### Mercaptosilane (G)

The adhesive compositions of the invention comprise (G) at least one mercaptosilane at < 1.2 wt% and/or (G') at least one aminosilane at < 0.5 wt% wherein the combination of amino and/or mercaptosilane is at least 0.6 wt%, based on the total weight of the adhesive composition.

The mercaptosilane is not particularly limited. Particularly preferred are mercaptosilanes of the following formula: 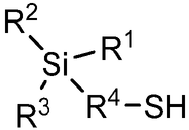 where R¹, R² and R³ are independently selected from OCH₃ and OC₂H₅; and R⁴ is CₙH₂ₙ where n is an integer of 1 to 12.

Particularly preferred are mercaptosilanes in which R¹, R² and R³ are OCH₃ and n is 1 to 6.

In a preferred embodiment the mercaptosilane is gamma-mercaptopropyltrimethoxysilane.

The at least one mercaptosilane is preferably present at a total mercaptosilane content of < 1.2 wt%, based on the total weight of the adhesive composition, more preferably at 0.9 to 1 wt%, particularly preferably at 0.91 to 0.95 wt%.

In a particularly preferred embodiment, the at least one mercaptosilane is gamma-mercaptopropyltrimethoxysilane at 0.93, 0.94 or 0.95 wt%, based on the total weight of the adhesive composition.

### Aminosilane (G')

The adhesive compositions of the invention comprise (G) at least one mercaptosilane at < 1.2 wt% and/or (G') at least one aminosilane at < 0.5 wt% wherein the combination of amino and/or mercaptosilane is at least 0.6 wt%, based on the total weight of the adhesive composition.

The aminosilane is not particularly limited. Primary and secondary aminosilanes may be used. Particularly preferred are silanes comprising secondary amines, in particular aminosilanes of the following formula: 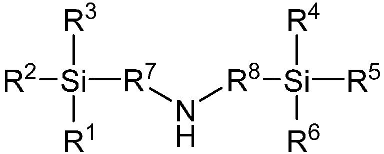
where R¹, R², R³, R⁴, R⁵ and R⁶ are independently selected from OCH₃ and OC₂H₅;
and R⁷ and R⁸ are independently selected from CₙH₂ₙ where n is an integer of 1 to 6, preferably n is 3.

In a preferred embodiment, the at least one aminosilane is bis(gamma-trimethoxysilylpropyl)amine.

The at least one aminosilane is preferably present at a total aminosilane content of < 0.5 wt%, based on the total weight of the adhesive composition, more preferably < 0.15 wt%, for example 0.05 or 0.11 wt%.

In a particularly preferred embodiment, the at least one aminosilane is bis(gamma-trimethoxysilylpropyl)amine at 0.11 wt%, based on the total weight of the adhesive composition.

### Carbon black (H)

The adhesive compositions of the invention comprise (H) carbon black at 17-20 wt%, based on the total weight of the adhesive composition.

The carbon black is not particularly limited. Preferred carbon blacks exhibit an oil absorption number of at least 80, preferably at least 90 and more preferably at least 95 cm³ of dibutyl phthalate per 100 g of carbon black, as measured according to ASTM D-2414-09. In addition the carbon black desirably has an iodine number of at least 80, determined according to ASTM D1510-11.

The carbon black is present at 17-20 wt%, based on the total weight of the adhesive composition, preferably at 17.6 to 18 wt%.

### Calcium carbonate (I)

The adhesive compositions of the invention comprise (I) calcium carbonate at 3-30 wt%, based on the total weight of the adhesive composition.

Preferably the calcium carbonate is present at 6 to 10 wt%, more preferably at 7 to 8 wt%, based on the total weight of the adhesive composition.

The total content of calcium carbonate plus filler is 20-30 wt%, based on the total weigh of the composition.

### Filler (J)

The adhesive compositions of the invention optionally comprise additional filler at 0-27 wt%, other than calcium carbonate and/or carbon black, based on the total weight of the composition.

Examples of suitable fillers include include clays, zeolites and silicates.

The filler may be clay, which may be present at 0-27 wt%. The clay is not particularly limited. Preferably the clay is in the form of pulverized powder, spray dried beads or finely ground particles. Surface treated aluminum silicates are an example. Calcined aluminium silicate clays (Kaolin) are preferred.

The total content of calcium carbonate plus clay as optional filler is 20-30 wt%, based on the total weigh of the composition.

In a preferred embodiment, the adhesive composition of the invention comprises 20 to 25 wt% clay, more preferably 21 to 24 wt%, particularly preferably 22 to 23 wt%, based on the total weight of the adhesive composition.

### Other ingredients

The adhesive compositions of the invention may additionally comprise other ingredients, such as, for example, one or more plasticizers (such as diisononyl phthalate), one or more stabilizers for example heat, light and UV-stabilizers.

Examples of heat stabilizers include alkyl substituted phenols, phosphites, sebacates and cinnamates. If present, a preferred heat stabilizer is an organophosphite and more specifically trisnonylphenyl phosphite as disclosed in U.S. Pat. No. 6,512,033. The heat stabilizer may constitute at least 0.01 or at least 0.3 weight percent based on the entire weight of the adhesive composition, up to at most 5 weight percent, up to 2 weight percent or up to 1.0 weight percent. The adhesive composition may be devoid of such a heat stabilizer.

For UV light stabilizers, they include benzophenones and benzotriazoles. Specific UV light absorbers include those from BASF such as TINUVIN^{™} P, TINUVIN^{™} 326, TINUVIN^{™} 213, TINUVIN^{™} 327, TINUVIN^{™} 571, TINUVIN^{™} 328, and from Cytec such as CYASORB^{™} UV-9, CYASORB^{™} UV-24, CYASORB^{™} UV-1164, CYASORB^{™} UV-2337, CYASORB^{™} UV-2908, CYASORB^{™} UV-5337, CYASORB^{™} UV-531, and CYASORB^{™} UV-3638. Among these, TINUVIN^{™} 571 is preferred. One or more UV light absorbers may constitute at least 0.1 weight percent, at least 0.2 weight percent or at least 0.3 parts by weight of the weight of the adhesive composition, and may constitute up to 3 weight percent, up to 2 weight percent or up to 1 weight percent thereof.

The adhesive composition of the invention may further include one or more light stabilizers. Preferred light stabilizers included hindered amine light stabilizers such as TINUVIN^{™} 144, TINUVIN^{™} 622, TINUVIN^{™} 77, TINUVIN^{™} 123, TINUVIN^{™} 765, CHIMASSORB^{™} 944 available from Cytec; CYASORB^{™} UV-500, CYASORB^{™} UV-3581, CYASORB^{™} UV-3346, all available from Ciba-Geigy. Among these, TINUVIN^{™} 765 is preferred choice. The light stabilizer(s) may constitute at least 0.1 weight percent, at least 0.2 weight percent or at least 0.3 weight percent of the adhesive composition, and may constitute up to 3 weight percent, up to 2 weight percent or up to 1.5 weight percent thereof.

### Adhered assemblies

In one aspect, the invention provides an adhered assembly comprising:
a glass substrate;
a second substrate;
a layer of an adhesive composition of the invention being adhesively in contact with both substrates.

The second substrate is not particularly limited, and may be, for example, glass, metal (particularly primed metal), e-coated surfaces, painted surfaces, wood, and cured polyurethanes. In a preferred embodiment, the second substrate is selected from metal (particularly primed metal), e-coated surface, cured polyurethanes and cured silanated polyurethanes.

The adhesives of the invention are particularly suited for adhering a windshield to an automobile chassis, particularly in after-market use. Typically a damaged windshield is removed from the chassis, leaving behind the original, cured adhesive, which is cut or trimmed to avoid excess. The adhesive of the invention is applied to the cut cured adhesive (usually a PU-based adhesive but may also be a silanated PU). Because the adhesives of the invention achieve impact strengths after 30 minutes > 3.4 J (as well as other requirements), they permit a 30-minute drive away time.

In a particularly preferred embodiment, the assembly of the invention comprises:
a glass substrate;
a cured adhesive substrate (such as cured polyurethane or cured silanated polyurethane);
a layer of an adhesive composition of the invention being adhesively in contact with both substrates.

### Method of manufacture

The adhesive compositions of the invention are made by mixing the ingredients under inert and dry conditions and/or under vacuum, until a homogenous mixture is obtained.

In one preferred method of manufacture, the calcium carbonate, filler (if used), and carbon black are mixed and dried at elevated temperature (e.g. at or about 204°C) for a prolonged period (e.g. at or about 20 hours) and then cooled in a closed container to form a filler mixture. The polyester prepolymer may be heated to 80°C for about 15h prior to use. The polyether prepolymer, amine catalyst, aliphatic polyisocyanate, optional plasticizer (e.g. diisononyl phthalate), and isocyanate functionalized silane are charged into a mixer. The mixture may be degassed and mixed under vacuum. The vacuum is broken with nitrogen and the mercaptosilane and aminosilane are added, followed by additional degassing and mixing under vacuum. The vacuum is broken again with nitrogen and the filler mixture is added into the mixer. Mixing is carried out to wet out the fillers. Vacuum is applied and mixing continued. After breaking the vacuum with nitrogen, the mixture is scraped down and the polyester prepolymer is added along with any stabilizers. Mixing under vacuum is continued. The resulting adhesive composition may be packaged, for example, it may be packaged into airtight tubes which are stored in nitrogen filled sealed aluminium bags.

### Use

The adhesive compositions of the invention are particularly suited for adhering glass to a second substrate. In particular, they are designed to satisfy the requirements for a thirty-minute drive away time, that is:
- impact strength after 30 minutes > 3.4 J;
- Young's modulus > 4 MPa;
- Lap shear strength on AD3402 > 350 psi and > 80% cohesive failure after 3 days at 23°C and 50% RH;
- Preferably electrically resistivity of > 1x10⁸ ohm*cm

In use, the adhesives are applied to a glass substrate and/or to the second substrate. If necessary, for example if the second substrate is a metal, the second substrate may be cleaned and primed prior to applying the adhesive. Typically for after-market windshield replacement, the second substrate is substantially the cured adhesive (usually PU or silanated PU) that was previously holding the windshield in place. The glass substrate and the second substrate are then brought into adhesive contact with each other, with the adhesive of the invention sandwiched therebetween. The adhesives of the invention give good results without the use of a primer. This is desirable as the application of a primer involves an additional step as well as drying time.

Curing is effected by atmospheric moisture.

### EXAMPLES

| **Table 1. Ingredients** | | |
|---|---|---|
| **Trademark or abbreviation** | **Chemistry** | **Function** |
| VORANOL 220-056N POLYOL | a nominally difunctional, poly(propylene oxide) having a hydroxyl number of 56 (equivalent weight 1000) | Ingredient in polyether prepolymer |
| VORANOL 232-036N POLYOL | a nominally trifunctional poly(propylene oxide) having a hydroxyl number of 36 (equivalent weight 1558) that is partially endcapped with ethylene oxide | Ingredient in polyether prepolymer |
| MDI | 4,4'-Methylenebis(phenyl isocyanate) | Diisocyanate |
| gamma-mercaptopropyltrimethoxysilane | gamma-mercaptopropyltrimethoxysilane | Mercaptosilane (G) |
| bis(gamma-trimethoxysilylpropyl)amine | bis(gamma-trimethoxysilylpropyl)amine | Amino silane (G') |
| Elftex S7100 | carbon black | Carbon Black Filler (H) |
| Clay | Kaolin clay (calcined aluminium silicate) | Clay Filler (J) |
| Calcium carbonate | CaCO₃ | Calcium Carbonate Filler (I) |
| Diisononyl phthalate | Diisononyl phthalate | Plasticizer |
| DOVERPHOS 4 | trisnonylphenyl phosphite | Stabilizer |
| TINUVIN 765 | Mixture of Bis(1,2,2,6,6-pentamethyl-4-piperidyl)sebecate and methyl 1,2,2,6,6-pentamethyl-4-piperidyl sebecate | Stabilizer |
| TINUVIN 571 | 2-(2H-benzotriazo-2-yl)-6-dodecyl-4-methyl-Phenol | Stabilizer |
| DMDEE | 2,2'-dimorpholinodiethylether | Amine catalyst (F) |
| Desmodur N 3300 | Aliphatic polyisocyanate based on HDI trimer, having an NCO content of 21.8 ± 0.3 % (according to DIN EN ISO 11 909) | Aliphatic polyisocyanate (C) |
| HDI | Hexamethylene diisocyanate | Aliphatic polyisocyanate |
| PAPI 20 | A polymethylene polyphenylisocyanate that contains MDI, having an NCO content of 30.4 % (according to DIN EN ISO 11 909) | Aromatic polyisocyanate (D) |
| Desmodur N-100 | Aliphatic polyisocyanate (HDI Biuret) used to make isocyanate functionalised silane | Ingredient in isocyanate functionalised silane |
| Fomrez UL-28 | dimethyltin dineodecanoate | Tin catalyst |
| KKAT 670 | Zinc carboxylate | Catalyst |

**Polyether prepolymer (A):** 363.68 g of Voranol 220-056 polyol, 527.04 g of Voranol 232-036 polyol and 32 g of diisononyl phthalate were charged into a 4-liter kettle, mixed and heated to 54°C under nitrogen. All subsequent steps were performed under nitrogen. 160.64 g of molten MDI was added and mixed in. 0.08 g of stannous octoate catalyst was added drop wise. The temperature in the kettle rose due to the exothermic heat of reaction; the reaction mixture was maintained between 80°C and 90°C for 30 minutes. The reaction mixture was then cooled to 60°C and 501.20 g of diisononyl phthalate and 15.36 g of diethyl malonate were added and mixed in for 30 minutes, followed by cooling to room temperature. The resulting polyalkylene prepolymer solution had an isocyanate content of 1.25% by weight and a viscosity of 16,000 cps at 23°C as measured according to the procedure disclosed in U.S. Patent No. 5,922,809 at column 12, lines 38 to 49.

**Polyester prepolymer (B):** was prepared as described in WO2017189057 in Example 5.

**Isocyanate functionalised silane (E):** A reaction product of a secondary aminoalkoxy silane and a polyisocyanate was prepared by adding 485 g of Desmodur N-100 (2.59 equivalents) (a solvent free aliphatic polyisocyanate resin based on hexamethylene diisocyanate-biuret), and 225 g of alkyl phthalate to a resin kettle equipped with a mechanical agitator, a thermometer, an N₂ inlet adapter and an addition funnel. The mixture was thoroughly mixed and purged under an N₂ blanket. About 300 g of N,N-bis[(3-trimethoxysilyl)-propyl]amine) (0.88 equivalents) was slowly added to the mixture. The adduct had an isocyanate content of 7.0 percent.

### Preparation of adhesive compositions

Using the proportions listed in Table 2, calcium carbonate, clay, and Elftex S7100 were mixed and dried at 204°C for about 20 hours and then cooled in a closed container to form a filler mixture. The polyester prepolymer was heated to 80°C for about 15h prior to use. The polyether prepolymer, DMDEE catalyst, aliphatic polyisocyanate, diisononyl phthalate, and isocyanate functionalized silane were charged into a 2-gallon mixer. The mixture was degassed and mixed under vacuum for 5 minutes. The vacuum was broken with nitrogen and then the mercaptosilane and aminosilane were added, followed by additional degassing and mixing under vacuum for 10 minutes.

The vacuum was broken again with nitrogen and then the filler mixture was added into the mixer. Mixing was started to wet out the fillers for 2 minutes. Vacuum was applied and mixing continued for 15 minutes. After breaking the vacuum with nitrogen, the mixture was scraped down and the polyester prepolymer was added along with any stabilizers. Mixing under vacuum was conducted for 10 minutes. The resulting adhesive composition was packaged into airtight tubes which were stored in nitrogen filled sealed aluminium bags.

### Adhesive Testing Procedures

Round patties of adhesive were cured for 7 days at conditions of 23°C and 50% relative humidity. Test coupons were cut from these cured sample patties and tested for Young's modulus according to ASTM D412 (Die C).

Glass coupons for primerless adhesion testing contain a press bent, bismuth based frit with a crystalline additive to aid in removing the glass from the mold.

### Lap Shear Test

All lap shear samples were prepared according to SAE J1529 (May 1986) with the following exceptions: metal substrate was taped to the bottom side of the board and glass and/or metal to the top side, the urethane beads were measured post test to provide specific areas in strength calculations, and a maximum of three samples were prepared for each test. Glass was cleaned with a water and solvent glass cleaner (BETACLEAN^{™} 3300) and a sponge. E-coat was cleaned with Acetone. E-coat was primed with BETAPRIME^{™} 5504G or BETAPRIME^{™} Optimum, which are all-in-one polyisocyanate surface treatments and allowed to flash for 15 minutes. Beads of adhesive were applied, and the glass was decked. Samples were placed in 23°C/50% RH for three days, after which the samples were pulled right away for initial lap shear strength at a rate of 1 inch/minute (2.5 cm/min) with an Instron Tester. A group of at least 3 lap shear samples were tested and averaged. The load at break of the sample as well as modulus was recorded.

### High Speed Impact Test

Impact resistance tests were carried out on an impact pendulum tester from TMI, type 43-01 at an impact speed of 4 m/s. The high-speed impact resistance and maximum strength were tested according to the following method. Samples were prepared by adhering approximately 1×1 inch pieces of fritted glass to the center of a 1×3 inch metal coupon. These were allowed to cure overnight. The glass samples were cleaned with the appropriate cleaners. An equal amount of 1×4 inch metal coupons were cleaned with Acetone. The 1×4 metal coupons were primed with the appropriate body primers. The primers were allowed to flash. The glass was inserted into specially designed fixtures that give a 1 ×1 ×0.25 inch block of urethane. The appropriate urethane was applied to the glass, and the appropriately primed 1X4 metal coupon was affixed perpendicular to and centered on the glass. After that the test specimens were stored for the desired cure time and environmental conditions. Then, the impact pendulum was brought up and latched, the test specimen fixed in position and the hammer released. For each test Impact resistance after 30 min at 23° C and 50% RH is reported in KJoules.

### Electrical resistivity

The resistivity of samples of adhesive was measured with an HP 4339B High Resistance Meter and all formulations had values > 1x10⁸ ohm*cm.

| **Table 2. Compositions of inventive and comparative examples (wt%, based on total weight of the adhesive)** | | | | | | | | | | | | | | |
|---|---|---|---|---|---|---|---|---|---|---|---|---|---|---|
| | **E1** | **E2** | **E3** | **E4** | **E5** | **CE1** | **CE2** | **CE3** | **CE4** | **CE5** | **CE6** | **CE7** | **CE8** | **CE9** |
| **Ingredient (wt%)** | | | | | | | | | | | | | | |
| **Polyether prepolymer (A)** | 53.5 | 53.2 | 53.3 | 53 | 52.64 | 54.55 | 54.55 | 54.55 | 54.01 | 53.72 | 54 | 55 | 54.05 | 54.05 |
| **Polyester prepolymer (B)** | 1.3 | 1.3 | 1.35 | 1.50 | 1.48 | 1.17 | 1.17 | 1.17 | 1.16 | 1.15 | 1.5 | 1.5 | 1.5 | 1.5 |
| **Amine catalyst (F)** | 0.75 | 0.75 | 0.75 | 0.8 | 0.75 | 0.49 | 0.49 | 0.35 | 0.49 | 0.48 | 0.48 | 0.48 | 0.48 | 0.43 |
| **Tin catalyst** | | | | | | | | 0.02 | | | | | | 0.015 |
| **KKAT670** | | | | | | | | | | | 0.05 | | | 0.3 |
| **Aliphatic polyisocyanate (C)** | 0.5 | 0.8 | 0.99 | 0.99 | 0.96 | 1.17 | 1.17 | 1 | 1.16 | 1.15 | 1.15 | 0.47 | 0.47 | 0.47 |
| **Aromatic polyisocyanate (D)** | 0.75 | 0.75 | 0.75 | 0.75 | 0.74 | 0 | 0 | 1 | 0 | 0.49 | 0.49 | 0.2 | 0.5 | 0.5 |
| **Isocyanate functionalised silane (E)** | 0.9 | 0.9 | 0.9 | 0.9 | 0.89 | 0 | 0 | 0 | 0.99 | 0.98 | 0.98 | 0.5 | 0.9 | 0.9 |
| **Mercaptosilane (G)** | 0.94 | 0.94 | 0.94 | 0.95 | 0.93 | 0.97 | 0.97 | 0.97 | 0.96 | 0.96 | 0.95 | 0.94 | 0.94 | 0.94 |
| **Aminosilane (G')** | 0.11 | 0.11 | 0.11 | 0.11 | 0.11 | 0.11 | 0.11 | 0.11 | 0.11 | 0.11 | 0.11 | 0.11 | 0.11 | 0.11 |
| **Carbon black (H)** | 17.82 | 17.82 | 17.82 | 17.8 | 17.64 | 17.55 | 17.55 | 16.59 | 17.37 | 17.28 | 17.25 | 17.21 | 17.21 | 17.21 |
| **Clay (J)** | 15.10 | 15.16 | 15.10 | 15 | 14.95 | 23.4 | 15 | 15 | 14.85 | 14.77 | 14.4 | 14.71 | 14.71 | 14.71 |
| **Calcium carbonate (I)** | 7.86 | 7.8 | 7.49 | 7.2 | 7.42 | 0 | 8.4 | 8.4 | 8.32 | 8.27 | 8 | 8.24 | 8.24 | 8.24 |
| **Plasticizer** | 0.47 | 0.47 | 0.5 | 1 | 1.49 | 0.59 | 0.59 | 0.59 | 0.58 | 0.64 | 0.64 | 0.64 | 0.64 | 0.38 |
| **Stabilizer** | | | | | | | | 0.25 | | | | | 0.25 | 0.25 |
| | | | | | | | | | | | | | | |
| **Small molecule NCO** | 2.15 | 2.45 | 2.64 | 2.64 | 2.59 | 1.17 | 1.17 | 2 | 2.15 | 2.62 | 2.62 | 1.17 | 1.87 | 1.87 |
| **Polyisocyanate** | 1.25 | 1.55 | 1.74 | 1.74 | 1.70 | 1.17 | 1.17 | 2 | 1.16 | 1.64 | 1.64 | 0.67 | 0.97 | 0.97 |
| **Calcium carbonate** | 7.86 | 7.8 | 7.49 | 7.2 | 7.42 | 0 | 8.4 | 8.4 | 8.32 | 8.27 | 8 | 8.24 | 8.24 | 8.24 |
| **Clay + calcium carbonate** | 22.96 | 22.96 | 22.59 | 22.2 | 22.37 | 23.4 | 23.4 | 23.4 | 23.17 | 23.04 | 22.4 | 22.95 | 22.95 | 22.95 |
| **solids** | 40.78 | 40.78 | 40.41 | 40 | 40.01 | 40.95 | 40.95 | 39.99 | 40.54 | 40.32 | 39.65 | 40.16 | 40.16 | 40.16 |

| **Table 3. Lap shear strength and failure mode for Examples of the invention and Comparative Examples** | | |
|---|---|---|
| **Example/Comparative Example** | **Lap shear strength (psi)** | **% Cohesive failure** |
| E1 | 455 | 94 |
| E2 | 368 | 100 |
| E3 | 503 | 100 |
| E4 | 585 | 80 |
| E5 | 357 | 100 |
| CE1 | 121 | 32 |
| CE2 | 263 | 100 |
| CE3 | 205 | 40 |
| CE4 | 187 | 100 |

| **Table 4. Lap shear modulus and Young's modulus for Examples of the invention and Comparative Examples** | | |
|---|---|---|
| **Example/Comparative Example** | **Lap shear modulus (MPa)** | **Young's modulus** |
| E1 | 1.21 | 4.08 |
| E2 | 1.54 | 6.07 |
| E3 | 1.39 | 5.81 |
| E4 | 1.43 | 4.88 |
| E5 | 1.35 | 5.08 |
| CE1 | 0.98 | -- |
| CE8 | 1.17 | -- |

| **Table 5. High-speed impact energy after 30 minutes for Examples of the invention and Comparative Examples** | |
|---|---|
| **Example/Comparative Example** | **High-speed impact energy (KJ)** |
| E1 | 4.4 |
| E2 | 3.9 |
| E3 | 3.7 |
| E4 | 4.2 |
| E5 | 3.9 |
| CE2 | 3.3 |
| CE5 | 2.9 |
| CE6 | 3.3 |
| CE8 | 3.1 |
| CE9 | 3.0 |

The above Tables show results for five inventive formulations and nine comparative formulations. In order to meet the requirements of automotive manufacturers and to have a safe drive away time of 30 minutes, the adhesives should have the following characteristics:
- impact strength after 30 minutes > 3.4 J;
- Young's modulus > 4 MPa;
- Lap shear strength on frit > 350 psi and > 80% cohesive failure after 3 days at 23°C and 50% RH;
- Preferably electrically resistivity of > 1x10⁸ ohm*cm

The performance of the comparative adhesives is lacking in at least one of the desired performance characteristics: lap shear strength (i.e. primer-less adhesion), lap shear modulus, or impact strength after 30 minutes (safe drive away time).

## Claims

1. A one-component polyurethane adhesive composition comprising:
(A) at least one polyether prepolymer at a total content of polyether prepolymer of 50-57 wt%;
(B) at least one polyester prepolymer at a total content of polyester prepolymer of 1.2-2.0 wt%;
(C) at least one aliphatic polyisocyanate at a total aliphatic polyisocyanate content of 0.4-1.2 wt%;
(D) at least one aromatic polyisocyanate at a total aromatic polyisocyanate content of 0.4-1.2 wt%;
(E) at least one isocyanate functionalized silane at a total isocyanate functionalized silane content of 0.4-1.5 wt%;
(F) amine catalyst at 0.50-0.99 wt%;
(G) at least one mercaptosilane at a total mercaptosilane content of < 1.2 wt% and/or (G') at least one aminosilane at a total aminosilane content of < 0.5 wt% wherein the combination of amino and/or mercaptosilane is at least 0.6 wt%;
(H) carbon black at 17-20 wt%;
(I) calcium carbonate at 3-30 wt%;
(J) optionally filler, other than calcium carbonate and/or carbon black, at 0-27 wt%;
wherein the total polyisocyanate content is 1.2 to 3 wt%, the total of calcium carbonate plus clay as optional filler is 20-30 wt%, and the weight percentages are based on the total weight of the polyurethane adhesive.

2. The adhesive composition of claim 1, wherein the at least one polyether prepolymer (A) is selected from polymers made by polymerizing one or more polyether polyols in the presence of a polyisocyanate, preferable diisocyanate, and mixtures of such polyether prepolymers.

3. The adhesive composition of claim 1 or 2, wherein the polyether prepolymer (A) is a mixture of polyalkylene oxide diols and/or triols reacted with MDI.

4. The adhesive of claim 1, 2 or 3, wherein the at least one polyether prepolymer (A) is selected from polyether prepolymers made by polymerizing in the presence of at least one polyisocyanate at least one polyol selected from:
(i) poly(alkylene oxide)diols, where the alkylene group is C₂ to C₄,
(ii) trifunctional polyols resulting from poly(akylene oxide)diols reacted with a trifunctional polyol, where the alkylene group is C₂ to C₄;
(iii) mixtures of (i), (ii) and (i) and (ii).

5. The adhesive of any one preceding claim, wherein the at least one polyether prepolymer (A) comprises a nominally trifunctional poly(propylene oxide) having a hydroxyl number of 36 (equivalent weight 1558) and a nominally trifunctional poly(propylene oxide) having a hydroxyl number of 56 (equivalent weight 1000), reacted with MDI.

6. The adhesive composition of any one preceding claim, wherein the at least one polyester prepolymer (B) is selected from polymers made by reacting one or more linear copolyesters with primary hydroxyl functionality with a polyisocyanate, preferably a diisocyanate, and mixtures of such polyester prepolymers.

7. The adhesive composition of any one preceding claim, wherein the at least one polyester prepolymer (B) is a reaction product of a copolyester of number-average molecular weight of 3,500 Da with MDI, having a melting point of 40-90 °C, the number-average molecular weight being determined by size exclusion chromatography (SEC).

8. The adhesive composition of any one preceding claim, wherein the at least one aliphatic polyisocyanate (C) is selected from isophorone diisocyanate, 1,6-hexamethylene diisocyanate, bis(4-isocyanatocyclohexyl)methane, and trimethyl hexamethylene diisocyanate, any of which can be modified to include biuret, allophonate, urea, carbamate, isocyanurate or carbodiimide groups, and mixtures of these aliphatic polyisocyanates, preferably wherein the at least one aliphatic polyisocyanate (C) is HDI trimer having an NCO content of 21.8 ± 0.3 % (according to DIN EN ISO 11 909).

9. The adhesive composition of any one preceding claim, wherein the aromatic polyisocyanate (D) is selected from diphenylmethane diisocyanate (MDI), polymethylene polyphenylisocyanates, polymeric MDI (PMDI, a mixture of diphenylmethane diisocyanate and polymethylene polyphenylioscyanates), tetramethylxylene diisocyanate, toluene diisocyanate, any of which can be modified to include biuret, allophonate, urea, carbamate, isocyanurate or carbodiimide groups, and mixtures of these aromatic polyisocyanates;
preferably wherein the aromatic polyisocyanate (D) is polymethylene polyphenylisocyanate that contains MDI, having an NCO content of 30.4 % (according to DIN EN ISO 11 909).

10. The adhesive composition of any one preceding claim, wherein the isocyanate functionalized silane (E) is selected from reaction products of aminosilanes with polyisocyanates, reaction products of mercaptosilanes with polyisocyanates, others, and mixtures of these; and/or
wherein the isocyanate functionalized silane (E) is a reaction product of a secondary aminoalkoxy silane and a polyisocyanate; and/or
wherein the isocyanate functionalized silane (E) is a reaction product of N,N-bis[(3-trimethoxysilyl)-propyl]amine) reacted with HDI-Biuret.

11. The adhesive composition of any one preceding claim, wherein the amine catalyst (F) is selected from tertiary amines, preferably wherein the amine catalyst (F) is selected from N,N-dimethylcyclohexane, triethylenediamine, N,N,N,N-tetramethylalkylenediamine, N,N,N,N-pentamethyldiethylenetriamine, triethylamine, N,N-dimethylbenzylamine, N,N-dimethylhexadecylamine, N,N-dimethylbutylamine, 2,2'-and dimorpholinodiethyl ether, more preferably wherein the amine catalyst (F) is 2,2'-and dimorpholinodiethyl ether.

12. The adhesive composition of any one preceding claim, wherein the at least one mercaptosilane (G) is selected from mercaptosilanes of the following formula: 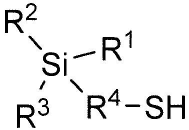 where R¹, R² and R³ are independently selected from OCH₃ and OC₂H₅; and R⁴ is CₙH₂ₙ where n is an integer of 1 to 12, and mixtures of such mercaptosilanes, preferably wherein R¹, R² and R³ are OCH₃ and n is 1 to 6, more preferably wherein the at least one mercaptosilane (G) is gamma-mercaptopropyltrimethoxysilane.

13. The adhesive composition of any one preceding claim, wherein the aminosilane (G') is selected from aminosilanes of the following formula: 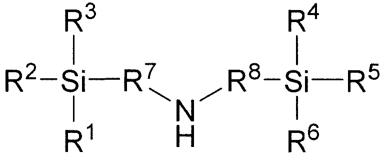
where R¹, R², R³, R⁴, R⁵ and R⁶ are independently selected from OCH₃ and OC₂H₅;
and R⁷ and R⁸ are independently selected from CₙH₂ₙ where n is an integer of 1 to 6, preferably n is 3, and mixtures of such aminosilanes, preferably wherein the aminosilane (G') is bis(gamma-trimethoxysilylpropyl)amine.

14. The adhesive composition of any one preceding claim, wherein the filler (J) is a Kaolin clay.

15. The adhesive composition of any one preceding claim, wherein the at least one polyether prepolymer (A) is present at 52-54 wt%, based on the total weight of the adhesive composition; and/or
wherein the at least one polyester prepolymer (B) is present at 1.3 to 1.5 wt%, based on the total weight of the adhesive composition, and/or
wherein the at least one aliphatic polyisocyanate (C) is present at 0.5 to 1 wt%, based on the total weight of the adhesive composition, and/or
wherein the at least one aromatic polyisocyanate (D) is present at 0.5 to 1 wt%, based on the total weight of the adhesive composition, and/or
wherein the at least one isocyanate functionalized silane (E) is present at 0.8 to 1 wt%, based on the total weight of the adhesive composition, and/or
wherein the amine catalyst (F) is present at 0.6 to 0.8 wt%, based on the total weight of the adhesive composition, and/or
wherein the mercaptosilane (G) is present at 0.91 to 0.95 wt%, based on the total weight of the adhesive composition, and/or
wherein the aminosilane (G') is present at 0.05 to 0.22 wt%, based on the total weight of the adhesive composition, and/or
wherein the carbon black (H) is present at 17.6 to 18 wt%, based on the total weight of the adhesive composition, and/or
wherein the calcium carbonate (I) is present at 6 to 10 wt%, based on the total weight of the adhesive composition, and/or
wherein the clay (J) is present at 21 to 24 wt% based on the total weight of the adhesive composition.

## Patentansprüche

1. Einkomponentige Polyurethan-Klebstoffzusammensetzung, umfassend:
(A) mindestens ein Polyether-Präpolymer mit einem Gesamtgehalt an Polyether-Präpolymer von 50-57 Gew.-%;
(B) mindestens ein Polyester-Präpolymer mit einem Gesamtgehalt an Polyester-Präpolymer von 1,2-2,0 Gew.-%;
(C) mindestens ein aliphatisches Polyisocyanat mit einem Gesamtgehalt an aliphatischem Polyisocyanat von 0,4-1,2 Gew.-%;
(D) mindestens ein aromatisches Polyisocyanat mit einem Gesamtgehalt an aromatischem Polyisocyanat von 0,4-1,2 Gew.-%;
(E) mindestens ein isocyanatfunktionalisiertes Silan mit einem Gesamtgehalt an isocyanatfunktionalisiertem Silan von 0,4-1,5 Gew.-%;
(F) Aminkatalysator in einer Menge von 0,50-0,99 Gew.-%;
(G) mindestens ein Mercaptosilan mit einem Gesamtgehalt an Mercaptosilan von < 1,2 Gew.-% und/oder (G') mindestens ein Aminosilan mit einem Gesamtgehalt an Aminosilan von < 0,5 Gew.-%, wobei die Kombination aus Amino- und/oder Mercaptosilan mindestens 0,6 Gew.-t% beträgt;
(H) Ruß in einer Menge von 17-20 Gew.-%;
(I) Calciumcarbonat in einer Menge von 3-30 Gew.-%;
(J) optional Füllstoff, ausgenommen Calciumcarbonat und/oder Ruß, in einer Menge von 0-27 Gew.-%;
wobei der Gesamtgehalt an Polyisocyanat 1,2 bis 3 Gew.-% beträgt, der Gesamtgehalt an Calciumcarbonat und Ton als optionalem Füllstoff 20-30 Gew.-% beträgt und sich die Gewichtsprozente auf das Gesamtgewicht des Polyurethan-Klebstoffs beziehen.

2. Klebstoffzusammensetzung nach Anspruch 1, wobei das mindestens eine Polyether-Präpolymer (A) ausgewählt ist aus Polymeren, die hergestellt werden durch Polymerisation eines oder mehrerer Polyether-Polyole in Gegenwart eines Polyisocyanats, vorzugsweise eines Diisocyanats, sowie aus Mischungen solcher Polyether-Präpolymere.

3. Klebstoffzusammensetzung nach Anspruch 1 oder 2, wobei das Polyether-Präpolymer (A) ein Mischung aus Polyalkylenoxiddiolen und/oder -triolen ist, die mit MDI umgesetzt wurden.

4. Klebstoff nach Anspruch 1, 2 oder 3, wobei das mindestens eine Polyether-Präpolymer (A) ausgewählt ist aus Polyether-Präpolymeren, die hergestellt werden durch Polymerisation in Gegenwart von mindestens einem Polyisocyanat und mindestens einem Polyol, ausgewählt aus:
(i) Poly(alkylenoxid)diolen, wobei die Alkylengruppe C₂ bis C₄ist,
(ii) trifunktionellen Polyolen, die aus Poly(alkylenoxid)diolen stammen, die mit einem trifunktionellen Polyol umgesetzt wurden, wobei die Alkylengruppe_{c2} bis_{c4}ist;
(iii) Mischungen aus (i), (ii) und (i) und (ii).

5. Klebstoff nach einem vorstehenden Anspruch, wobei das mindestens eine Polyether-Präpolymer (A) ein nominell trifunktionelles Poly(propylenoxid) mit einer Hydroxylzahl von 36 (Äquivalentgewicht 1558) und ein nominell trifunktionelles Poly(propylenoxid) mit einer Hydroxylzahl von 56 (Äquivalentgewicht 1000) umfasst, das mit MDI umgesetzt wurde.

6. Klebstoffzusammensetzung nach einem vorstehenden Anspruch, wobei das mindestens eine Polyester-Präpolymer (B) ausgewählt ist aus Polymeren, die hergestellt werden durch Umsetzung eines oder mehrerer linearer Copolyester mit primärer Hydroxylfunktionalität mit einem Polyisocyanat, vorzugsweise einem Diisocyanat, sowie aus Mischungen solcher Polyester-Präpolymere.

7. Klebstoffzusammensetzung nach einem vorstehenden Anspruch, wobei das mindestens eine Polyester-Präpolymer (B) ein Reaktionsprodukt eines Copolyesters mit einem zahlenmittleren Molekulargewicht von 3.500 Da mit MDI ist, das einen Schmelzpunkt von 40-90 °C aufweist, wobei das zahlenmittlere Molekulargewicht mittels Größenausschlusschromatographie (SEC) bestimmt wird.

8. Klebstoffzusammensetzung nach einem vorstehenden Anspruch, wobei das mindestens eine aliphatische Polyisocyanat (C) ausgewählt ist aus Isophorondiisocyanat, 1,6-Hexamethylendiisocyanat, Bis(4-isocyanatocyclohexyl)methan und Trimethylhexamethylendiisocyanat, die jeweils so modifiziert sein können, dass sie Biuret-, Allophonat-, Harnstoff-, Carbamat-, Isocyanurat- oder Carbodiimidgruppen enthalten, sowie aus Mischungen dieser aliphatischen Polyisocyanate, vorzugsweise wobei es sich bei dem mindestens einen aliphatischen Polyisocyanat (C) um ein HDI-Trimer mit einem NCO-Gehalt von 21,8 ± 0,3 % handelt (nach DIN EN ISO 11909).

9. Klebstoffzusammensetzung nach einem vorstehenden Anspruch, wobei das aromatische Polyisocyanat (D) ausgewählt ist aus Diphenylmethandiisocyanat (MDI), Polymethylenpolyphenylisocyanaten, polymerem MDI (PMDI, einer Mischung aus Diphenylmethandiisocyanat und Polymethylenpolyphenylisocyanaten), Tetramethylxyloldiisocyanat, Toluoldiisocyanat, die jeweils so modifiziert sein können, dass sie Biuret-, Allophonat-, Harnstoff-, Carbamat-, Isocyanurat- oder Carbodiimidgruppen enthalten, sowie aus Mischungen dieser aromatischen Polyisocyanate;
vorzugsweise wobei es sich bei dem aromatischen Polyisocyanat (D) um ein MDIhaltiges Polymethylenpolyphenylisocyanat mit einem NCO-Gehalt von 30,4 % handelt (nach DIN EN ISO 11 909).

10. Klebstoffzusammensetzung nach einem vorstehenden Anspruch, wobei das isocyanatfunktionalisierte Silan (E) ausgewählt ist aus Reaktionsprodukten von Aminosilanen mit Polyisocyanaten, Reaktionsprodukten von Mercaptosilanen mit Polyisocyanaten, anderen, sowie aus Mischungen dieser; und/oder
wobei das isocyanatfunktionalisierte Silan (E) ein Reaktionsprodukt eines sekundären Aminoalkoxysilans und eines Polyisocyanats ist; und/oder
wobei das isocyanatfunktionalisierte Silan (E) ein Reaktionsprodukt von N,N-bis[(3-trimethoxysilyl)-propyl]amine), das mit HDI-Biuret umgesetzt wurde.

11. Klebstoffzusammensetzung nach einem vorstehenden Anspruch, wobei der Aminkatalysator (F) ausgewählt ist aus tertiären Aminen, vorzugsweise wobei der Aminkatalysator (F) ausgewählt aus N,N-Dimethylcyclohexan, Triethylendiamin, N,N,N,N-Tetramethylalkylendiamin, N,N,N,N-Pentamethyldiethylentriamin, Triethylamin, N,N-Dimethylbenzylamin, N,N-Dimethylhexadecylamin, N,N-Dimethylbutylamin, 2,2'- und Dimorpholinodiethylether, bevorzugter wobei der Aminkatalysator (F) 2,2'- und Dimorpholinodiethylether ist.

12. Klebstoffzusammensetzung nach einem vorstehenden Anspruch, wobei das mindestens eine Mercaptosilan (G) ausgewählt ist aus Mercaptosilanen der folgenden Formel: 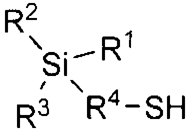 wobei R¹, R² und R³ unabhängig voneinander ausgewählt sind aus OCH₃ und aC₂H₅; und R⁴ CₙH₂ₙ ist, wobei n eine ganze Zahl von 1 bis 12 ist, und aus Mischungen solcher Mercaptosilane, vorzugsweise wobei R¹, R² und R³ OCH₃ sind und n von 1 bis 6 ist, bevorzugter wobei das mindestens eine Mercaptosilan (G) gamma-Mercaptopropyltrimethoxysilan ist.

13. Klebstoffzusammensetzung nach einem vorstehenden Anspruch, wobei das Aminosilan (G') ausgewählt ist aus Aminosilanen der folgenden Formel: 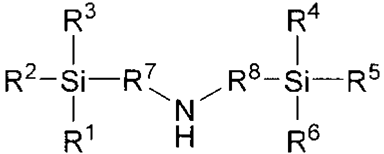
wobei R¹, R², R³, R⁴, R⁵ und R⁶ unabhängig voneinander ausgewählt sind aus OCH₃ und OC₂H₅;
und R⁷ und R⁸ unabhängig voneinander ausgewählt sind aus CₙH₂ₙ, wobei n eine ganze Zahl von 1 bis 6 ist, vorzugsweise n = 3, und aus Mischungen solcher Aminosilane, wobei das Aminosilan (G') vorzugsweise Bis(gamma-trimethoxysilylpropyl)amin ist.

14. Klebstoffzusammensetzung nach einem vorstehenden Anspruch, wobei der Füllstoff (J) ein Kaolin-Ton ist.

15. Klebstoffzusammensetzung nach einem vorstehenden Anspruch, wobei das mindestens eine Polyether-Präpolymer (A) in einer Menge von 52 bis 54 Gew.-%, bezogen auf das Gesamtgewicht der Klebstoffzusammensetzung, vorliegt; und/oder
wobei das mindestens eine Polyester-Präpolymer (B) in einer Menge von 1,3 bis 1,5 Gew.-%, bezogen auf das Gesamtgewicht der Klebstoffzusammensetzung, vorliegt, und/oder
wobei das mindestens eine aliphatische Polyisocyanat (C) in einer Menge von 0,5 bis 1 Gew.-%, bezogen auf das Gesamtgewicht der Klebstoffzusammensetzung, vorliegt, und/oder
wobei das mindestens eine aromatische Polyisocyanat (D) in einer Menge von 0,5 bis 1 Gew.-%, bezogen auf das Gesamtgewicht der Klebstoffzusammensetzung, vorliegt, und/oder
wobei das mindestens eine isocyanatfunktionalisierte Silan (E) in einer Menge von 0,8 bis 1 Gew.-%, bezogen auf das Gesamtgewicht der Klebstoffzusammensetzung, vorliegt, und/oder
wobei der Aminkatalysator (F) in einer Menge von 0,6 bis 0,8 Gew.-%, bezogen auf das Gesamtgewicht der Klebstoffzusammensetzung, vorliegt, und/oder
wobei das Mercaptosilan (G) in einer Menge von 0,91 bis 0,95 Gew.-%, bezogen auf das Gesamtgewicht der Klebstoffzusammensetzung, vorliegt, und/oder
wobei das Aminosilan (G') in einer Menge von 0,05 bis 0,22 Gew.-%, bezogen auf das Gesamtgewicht der Klebstoffzusammensetzung, vorliegt, und/oder
wobei der Ruß (H) in einer Menge von 17,6 bis 18 Gew.-%, bezogen auf das Gesamtgewicht der Klebstoffzusammensetzung, vorliegt, und/oder
wobei das Calciumcarbonat (I) in einer Menge von 6 bis 10 Gew.-%, bezogen auf das Gesamtgewicht der Klebstoffzusammensetzung, vorliegt, und/oder
wobei der Ton (J) in einer Menge von 21 bis 24 Gew.-%, bezogen auf das Gesamtgewicht der Klebstoffzusammensetzung, vorliegt.

## Revendications

1. Composition adhésive de polyuréthane mono-composant comprenant :
(A) au moins un prépolymère de polyéther à une teneur totale en prépolymère de polyéther de 50 à 57 % en poids ;
(B) au moins un prépolymère de polyester à une teneur totale en prépolymère de polyester de 1,2 à 2,0 % en poids ;
(C) au moins un polyisocyanate aliphatique à une teneur totale en polyisocyanate aliphatique de 0,4 à 1,2 % en poids ;
(D) au moins un polyisocyanate aromatique à une teneur totale en polyisocyanate aromatique de 0,4 à 1,2 % en poids ;
(E) au moins un silane fonctionnalisé par un isocyanate à une teneur totale en silane fonctionnalisé par un isocyanate de 0,4 à 1,5 % en poids ;
(F) un catalyseur amine à 0,50-0,99 % en poids ;
(G) au moins un mercaptosilane à une teneur totale en mercaptosilane de < 1,2 % en poids et/ou (G') au moins un aminosilane à une teneur totale en aminosilane de < 0,5 % en poids dans lequel la combinaison d'amino et/ou la teneur en mercaptosilane est d'au moins 0,6 % en poids ;
(H) du noir de carbone à 17-20 % en poids ;
(I) du carbonate de calcium à 3-30 % en poids ;
(J) éventuellement un agent de remplissage, autre que le carbonate de calcium et/ou du noir de carbone, à 0-27 % en poids ;
dans lequel la teneur totale en polyisocyanate est de 1,2 à 3 % en poids, la teneur totale en carbonate de calcium plus argile (charge facultative) est de 20 à 30 % en poids, et les pourcentages pondéraux sont calculés par rapport au poids total de l'adhésif de polyuréthane.

2. Composition adhésive selon la revendication 1, dans laquelle au moins un prépolymère de polyéther (A) est sélectionné parmi les polymères fabriqués par polymérisation un ou plusieurs polyols de polyéther en présence d'un polyisocyanate, de préférence d'un diisocyanate, et de mélanges de tels prépolymères de polyéther.

3. Composition adhésive selon la revendication 1 ou 2, dans laquelle le prépolymère polyéther (A) est un mélange de diols d'oxyde de polyalkylène et/ou les triols ont réagi avec le MDI.

4. Composition adhésive selon la revendication 1, 2 ou 3, dans lequel au moins un prépolymère de polyéther (A) est choisi parmi les prépolymères de polyéther obtenus par polymérisation en présence d'au moins un polyisocyanate et d'au moins un polyol choisi parmi :
(i) poly(oxyde d'alkylène)diols, où le groupe alkylène est en C₂ à C₄,
(ii) polyols trifonctionnels résultant de la réaction de poly(oxyde d'alkylène)diols avec un polyol trifonctionnel, où le groupe alkylène est en C₂ à C₄;
(iii) mélanges de (i), (ii) et (i) et (ii).

5. Composition adhésive selon une quelconque revendication précédente, dans lequel au moins un prépolymère de polyéther (A) comprend un poly(oxyde de propylène) nominalement trifonctionnel présentant un nombre d'hydroxyle de 36 (poids équivalent 1558) et un poly(oxyde de propylène) nominalement trifonctionnel présentant un nombre d'hydroxyle de 56 (poids équivalent 1000), ayant réagi avec du MDI.

6. Composition adhésive selon une quelconque revendication précédente, dans laquelle au moins un prépolymère de polyester (B) est choisi parmi les polymères obtenus par réaction d'un ou plusieurs copolyesters linéaires à fonctionnalité hydroxyle primaire avec un polyisocyanate, de préférence un diisocyanate, et des mélanges de tels prépolymères de polyester.

7. Composition adhésive selon une quelconque revendication précédente, dans laquelle au moins un prépolymère de polyester (B) est un produit de réaction d'un copolyester de poids moléculaire moyen en nombre de 3 500 Da avec du MDI, présentant un point de fusion de 40 à 90 °C, le poids moléculaire moyen en nombre étant déterminé par chromatographie d'exclusion stérique (SEC).

8. Composition adhésive selon une quelconque revendication précédente, dans laquelle au moins un polyisocyanate aliphatique (C) est choisi parmi l'isophorone diisocyanate, le 1,6-hexaméthylène diisocyanate, le bis(4-isocyanatocyclohexyl)méthane et le triméthyl hexaméthylène diisocyanate, chacun pouvant être modifié pour inclure des groupes biuret, allophonate, urée, carbamate, isocyanurate ou carbodiimide, et des mélanges de ces polyisocyanates aliphatiques, de préférence dans lequel au moins un polyisocyanate aliphatique (C) est un trimère d'HDI présentant une teneur en NCO de 21,8 ± 0,3 % (selon DIN EN ISO 11 909).

9. Composition adhésive selon une quelconque revendication précédente, dans laquelle le polyisocyanate aromatique (D) est choisi parmi le diisocyanate de diphénylméthane (MDI), les polyisocyanates de polyméthylène, le MDI polymérique (PMDI, un mélange de diisocyanate de diphénylméthane et de polyisocyanates de polyméthylène), le diisocyanate de tétraméthylxylène, le diisocyanate de toluène, dont chacun peut être modifié pour inclure des groupes biuret, allophonate, urée, carbamate, isocyanurate ou carbodiimide, et des mélanges de ces polyisocyanates aromatiques ;
de préférence dans lequel le polyisocyanate aromatique (D) est un polyméthylène polyphénylisocyanate contenant du MDI, présentant une teneur en NCO de 30,4 % (selon DIN EN ISO 11 909).

10. Composition adhésive selon une quelconque revendication précédente, dans laquelle le silane fonctionnalisé à l'isocyanate (E) est choisi parmi les produits de réaction des aminosilanes avec les polyisocyanates, les produits de réaction des mercaptosilanes avec les polyisocyanates, d'autres, et des mélanges de ceux-ci ; et/ou
dans lequel le silane fonctionnalisé à l'isocyanate (E) est un produit de réaction d'un aminoalcoxy silane secondaire et d'un polyisocyanate ; et/ou
dans lequel le silane fonctionnalisé par l'isocyanate (E) est un produit de réaction de N,N-bis[(3-trimethoxysilyl)-propyl]amine) a réagi avec HDI-Biuret.

11. Composition adhésive selon une quelconque revendication précédente, dans laquelle le catalyseur aminé (F) est choisi parmi les amines tertiaires, de préférence dans laquelle le catalyseur aminé (F) est choisi parmi le N,N-diméthylcyclohexane, la triéthylènediamine, la N,N,N,N-tétraméthylalkylènediamine, la N,N,N,N-pentaméthyldiéthylènetriamine, la triéthylamine, la N,N-diméthylbenzylamine, la N,N-diméthylhexadécylamine, la N,N-diméthylbutylamine, l'éther 2,2'- et dimorpholinodiéthylique, plus particulièrement dans laquelle le catalyseur aminé (F) est l'éther 2,2'- et dimorpholinodiéthylique.

12. Composition adhésive selon une quelconque revendication précédente, dans laquelle l'au moins un mercaptosilane (G) est choisi parmi les mercaptosilanes de la formule suivante : 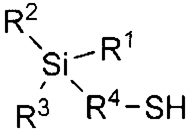 où R¹, R² et R³ sont sélectionnés indépendamment parmi OCH₃et OC₂H₅ ; et R⁴ est CₙH₂ₙ où n est un entier de 1 à 12, et des mélanges de tels mercaptosilanes, de préférence dans lesquels R¹, R² et R³ sont OCH₃ et n est de 1 à 6, plus particulièrement dans lesquels au moins un mercaptosilane (G) est le gamma-mercaptopropyltriméthoxysilane.

13. Composition adhésive selon une quelconque revendication précédente, dans laquelle l'aminosilane (G') est choisi parmi les aminosilanes de la formule suivante : 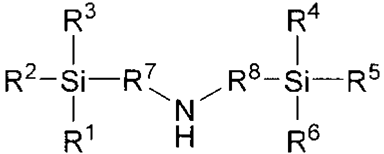
où R¹, R², R³, R⁴, R⁵ et R⁶ sont sélectionnés indépendamment parmi OCH₃ et OC₂H₅ ;
et R⁷ et R⁸ sont sélectionnés indépendamment parmi CₙH₂ₙ où n est un entier de 1 à 6, de préférence n est 3, et des mélanges de tels aminosilanes, de préférence dans lesquels l'aminosilane (G') est la bis(gamma-triméthoxysilylpropyl)amine.

14. Composition adhésive selon une quelconque revendication précédente, dans laquelle la charge (J) est une argile kaolinique.

15. Composition adhésive selon une quelconque revendication précédente, dans laquelle l'au moins un prépolymère de polyéther (A) est présent entre 52 et 54 % de poids, basé sur le poids total de la composition adhésive ; et/ou
dans lequel l'au moins un prépolymère de polyester (B) est présent entre 1,3 et 1,5 % en poids, basé sur le poids total de la composition adhésive, et/ou
dans lequel l'au moins un polyisocyanate aliphatique (C) est présent entre 0,5 et 1 % en poids, basé sur le poids total de la composition adhésive, et/ou
dans lequel l'au moins un polyisocyanate aromatique (D) est présent entre 0,5 et 1 % en poids, basé sur le poids total de la composition adhésive, et/ou
dans lequel l'au moins un silane fonctionnalisé par un isocyanate (E) est présent entre 0,8 et 1 % en poids, basé sur le poids total de la composition adhésive, et/ou
dans lequel le catalyseur amine (F) est présent entre 0,6 et 0,8 % en poids, basé sur le poids total de la composition adhésive, et/ou
dans lequel le mercaptosilane (G) est présent entre 0,91 et 0,95 % en poids, basé sur le poids total de la composition adhésive, et/ou
dans lequel l'aminosilane (G') est présent entre 0,05 et 0,22 % en poids, basé sur le poids total de la composition adhésive, et/ou
dans lequel le noir de carbone (H) est présent entre 17,6 et 18 % en poids, basé sur le poids total de la composition adhésive, et/ou
dans lequel le carbonate de calcium (I) est présent entre 6 et 10 % en poids, basé sur le poids total de la composition adhésive, et/ou
dans lequel l'argile (J) est présente entre 21 et 24 % en poids par rapport au poids total de la composition adhésive.
